# EUROPEAN PATENT SPECIFICATION

(11) **EP 1 522 071 B1**
(45) Date of publication and mention of the grant of the patent: **23.04.2008**
(21) Application number: 03740901.8
(22) Date of filing: 13.06.2003
(51) Int. Cl.: G11B 20/00, G06K 19/07

(54) **DATA RETENTION OF INTEGRATED CIRCUIT ON RECORD CARRIER**
DATENSCHUTZ VON INTEGRIERTER SCHALTUNG AUF EINEM AUFZEICHNUNGSTRÄGER
RETENTION DE DONNEES DE CIRCUIT INTEGRE SUR UN SUPPORT D'ENREGISTREMENT

(30) Priority: 08.07.2002 EP 02078328
(43) Date of publication of application: 13.04.2005
(73) Proprietor: Koninklijke Philips Electronics N.V., 5621 BA Eindhoven (NL)
(72) Inventor: KAHLMAN, Josephus, A., H., M., NL-5656 AA Eindhoven (NL); SCHEP, Cornelis, M., NL-5656 AA Eindhoven (NL); AKKERMANS, Antonius, H., M., NL-5656 AA Eindhoven (NL)
(74) Representative: Bekkers, Joost J.J
(86) International application number: PCT/IB2003/002834
(87) International publication number: WO 2004/006248

(56) References cited:
- EP-A- 0 809 245
- EP-A- 0 849 734
- US-A- 5 499 017
- PATENT ABSTRACTS OF JAPAN vol. 016, no. 386 (P-1404), 18 August 1992 (1992-08-18) -& JP 04 124788 A (FUJITSU LTD), 24 April 1992 (1992-04-24)
- PATENT ABSTRACTS OF JAPAN vol. 016, no. 463 (P-1428), 25 September 1992 (1992-09-25) -& JP 04 165583 A (YAMATAKE HONEYWELL CO LTD), 11 June 1992 (1992-06-11)

## Description

The invention relates to a record carrier comprising an information area for storing information, and further relates to an integrated circuit comprising a storage unit for storing additional information. The invention also relates to a method of restoring the additional information. The invention also relates to an apparatus and to an integrated circuit.

A record carrier of the type described in the opening paragraph is known, inter alia, from patent application WO 02/17316 (= PHNL010233). This patent application discloses an integrated circuit present on a record carrier comprising a light-sensitive sensor. The integrated circuit can be powered via this sensor.

Recently, it has been proposed to equip optical record carriers, such as, for example, CD-ROM discs or DVD-Video discs, with an integrated circuit. The integrated circuit can be used for storing all kinds of information, for example information related to the actual content stored on the record carrier, but also access information. This access information may comprise keys for encrypting and decrypting the stored information or Digital Rights Management (DRM) information, i.e. information for controlling the type of access to the information, like read-only, copy-only-once, etc. Use of an integrated circuit on a record carrier appears to be a robust method of copy protection, because the information present in the integrated circuit is secret and cannot be easily accessed.

As the integrated circuit present on such a record carrier must be able to retain and/or store information, it comprises a storage unit, besides means for receiving and transmitting information. This storage unit may be magnetically readable and/or programmable. An example of a magnetically readable storage unit is a hard disc. This storage unit may also be electrically readable and/or programmable. Examples are non-volatile memories such as EEPROM, Flash, MRAM or FERAM. All of these memories are rewritable multiple times. Detailed information on these so-called non-volatile memories can be found in "Non-volatile semiconductor memories, technologies, design, and applications", Chenming HU (ed.), 1991, ISBN 0-87942-269-6.

In general, most storage units suffer from data degradation and/or data loss. Associated with this is the term "data retention time". The data retention time is the time for which the reliability and/or correctness of data stored in the storage unit is guaranteed. For a non-volatile memory such as an EEPROM (an electrically erasable programmable read-only memory that is inexpensive and needs no backup battery), the data retention time is specified for approximately 10 years. The data retention time for an EEPROM is not indefinite as, over time, charge tends to leak from the floating gates of some of the memory devices of the EEPROM. Over time, this leakage can lead to incorrect information or to a complete loss of information.

The inventors have realized that it is desirable to prevent this loss of information. If this information is degenerated or lost, it is possible that the information stored in the record carrier cannot be accessed anymore. This holds, for example, if the information is key information or DRM information. It is important to avert this, as it would lead to unjustly restricting the usage rights of the user or buyer of the record carrier concerned.

It is an object of the invention to realize a record carrier comprising an integrated circuit, for which the loss of information stored in the integrated circuit, due to natural deterioration of the memory type used or due to any other cause, can be overcome. It is a further object to realize a method of restoring the additional information. It is a further object to realize an apparatus for performing the method. It is a further object to realize an integrated circuit for use in the record carrier.

According to the invention, the integrated circuit present on the record carrier further comprises a one-time programmable memory comprising a resurrection key, the one-time programmable memory having a substantially larger data retention time than the storage unit. By equipping the integrated circuit with a one-time programmable memory having a substantially larger data retention time than the storage unit and by storing a resurrection key in this memory, it becomes possible to restore lost or deteriorated additional information, because the resurrection key can be used for recovering the additional information stored in the storage unit. The record carrier according to the invention thus has the advantage that the information stored remains usable, even after the additional information stored in the storage unit has been degenerated or is lost.

The invention is based on the following recognition. Nowadays, most record carriers available have such a high quality with regard to durability that, if such record carriers are equipped with storage units having a limited data retention time, it is not just imaginary that the information stored on such a record carrier "survives" this storage unit, i.e. the additional information present in the storage unit is lost or is degenerated before the value of the information stored on the record carrier is lost. The data retention time of a non-volatile memory like an EEPROM is specified for approximately 10 years. For a record carrier with an integrated circuit comprising such an EEPROM, this implies that the integrity of the keys and the updatable rights stored in the EEPROM are not guaranteed after that time. The inventors have recognized that this effect is detrimental to the use of such record carriers.

In an advantageous embodiment of the record carrier according to the invention, the one-time programmable memory further comprises information related to the expiration date of the information stored or to be stored in the information area. This has the advantage that this information allows a more accurate determination of the way in which the additional information is lost or has been degenerated.

In a further advantageous embodiment of the record carrier according to the invention, the record carrier further comprises a disc key. The resurrection key is preferably encrypted with the disc key. The expiration date is preferably encrypted with the disc key. Using the disc key, the resurrection key and the expiration date can be protected against illegal access, as only compliant players are intended to be able to read out this key.

In a further advantageous embodiment of the record carrier according to the invention, the disc key is a unique disc key that is derived from an identifier of the integrated circuit. The one-time programmable memory preferably further comprises the identifier. By deriving the disc key also from an identifier of the integrated circuit, for example a unique number stored in the integrated circuit, it is possible to strengthen the copy protection or information access system. The identifier can already be stored in the integrated circuit during production of the circuit, which makes changing or removing the identifier becomes almost impossible.

In a further advantageous embodiment of the record carrier according to the invention, the one-time programmable memory is realized in fuse-logic. A fuse-logic one-time programmable memory has the advantage that it has an almost indefinite retention time.

In a further advantageous embodiment of the record carrier according to the invention, the storage unit is an EEPROM having a data retention time of approximately 10 years. This record carrier according to the invention has the advantage that the storage unit used on the integrated circuit present on the record carrier can be made thinner, as the thickness of the isolator layer in the storage unit, for example a silicon-oxide layer, can be decreased. Although this will increase the chance that the electrons trapped in the floating gate of the EEPROM cell will flow away and will thus decrease the data retention time of the memory, the information lost can be restored by using the resurrection key. This record carrier according to the invention thus has the further advantage that storage units with a decreased retention time can be used. These kinds of storage units can generally be produced faster and cheaper than storage units with a larger retention time. For example, the so-called Mifare Ultra Light EEPROM is produced by skipping certain steps in the IC process and by not performing extensive testing.

In a further advantageous embodiment of the record carrier according to the invention, the integrated circuit is contactlessly readable.

The invention further relates to a method of restoring the additional information stored in the storage unit present on the integrated circuit of the record carrier according to the invention. The invention further relates to an apparatus for performing the method according to the invention. The invention further relates to an integrated circuit for use in the record carrier according to the invention.

These and other aspects of the invention are apparent from and will be elucidated with reference to the embodiments described hereinafter, and with reference to the accompanying drawings, in which:
Fig. 1 shows diagrammatically an embodiment of the record carrier according to the invention;
Fig. 2 shows the use of the embodiment of the record carrier according to the invention as shown in Fig. 1;
Fig. 3 shows a first embodiment of the method of restoring the additional information present on the integrated circuit of the record carrier according to the invention;
Fig. 4 shows a flow chart accompanying this first embodiment;
Fig. 5 shows a second embodiment of the method of restoring the additional information present on the integrated circuit of the record carrier according to the invention;
Fig. 6 shows a third embodiment of the method of restoring the additional information present on the integrated circuit of the record carrier according to the invention;
Fig. 7 shows a fourth embodiment of the method of restoring the additional information present on the integrated circuit of the record carrier according to the invention.

Corresponding elements in the different Figures have identical reference numerals.

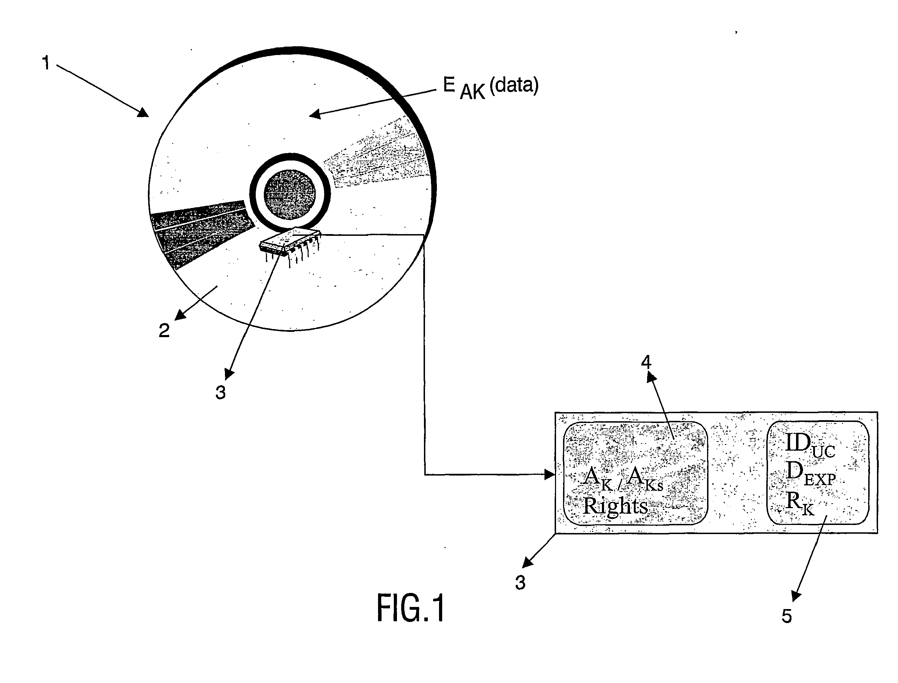

Fig. 1 shows diagrammatically an embodiment of the record carrier according to the invention. A record carrier 1, for example a CD-Audio disc, has an information area 2 for storing information, and an integrated circuit 3. It is schematically indicated that the integrated circuit 3 has a storage unit 4 for storing additional information, such as, for example, an Asset Key (A_{K}) or Asset Keys (A_{Ks}) and Rights information, and a one-time programmable (OTP) memory 5.

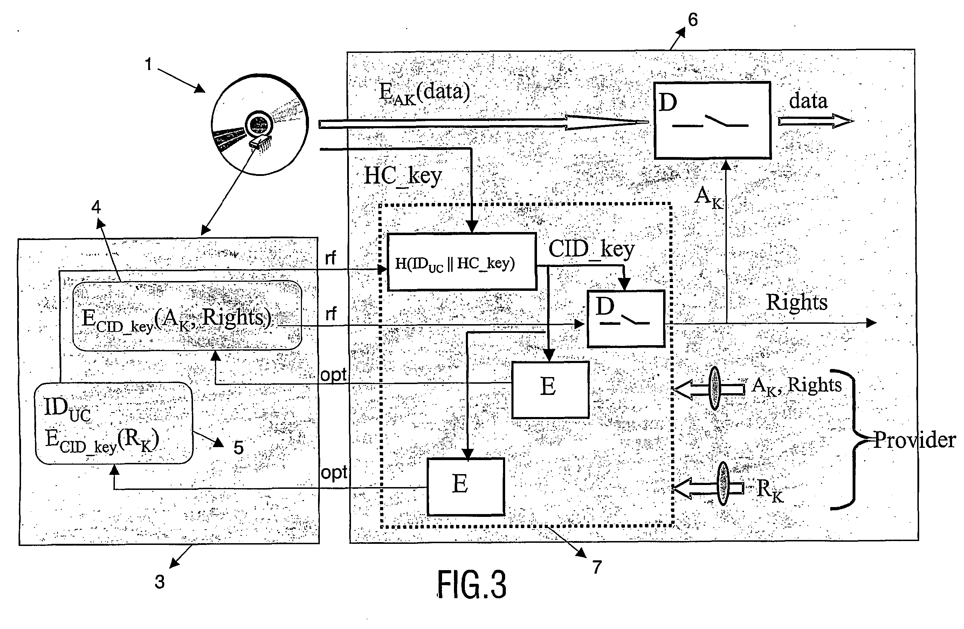

An Asset Key is a key that is used for encrypting a certain asset with, for example a certain track of a CD-Audio disc. Each track of this disc may have its own Asset Key. However, an Asset Key can also be used for encrypting a number of tracks or for encrypting the complete contents of the disc. When these Asset Keys are used for controlling access to the information stored on a record carrier, they must be encrypted in order to prevent illegal access to the information. To this end, they can be encrypted with a disc key (see Figs. 3,4 and 5 and the accompanying description for an example of such a disc key).

Rights information is so-called Digital Rights Management (DRM) information, information related to the way in which the information stored in the information area, the actual data, is allowed to be used. This DRM information is known to the skilled person, and may, for example, indicate the number of times the information may be copied or played back. This DRM information is updatable, for example, when the information is copied one time, the DRM information indicating the number of times the information may be copied must be amended in that it is decreased by one.

The storage unit circuit may be, for example, an EEPROM or flash EEPROM. An EEPROM is an electrically erasable programmable read-only memory, which is erasable byte by byte, in contrast to a flash EEPROM, which is an EEPROM that cannot be erased by bytes but can be erased by the entire chip or large sections thereof. Detailed information on EEPROM and flash EEPROM can be found in the article "Non-volatile semiconductor memories, technologies, design, and applications", mentioned hereinbefore.

The memory arrays of these memories are constructed of a large plurality of floating-gate metal-oxide-silicon field effect transistor devices arranged as memory cells in typical row and column fashion with circuitry for accessing individual cells and placing the memory transistors of these cells in different memory conditions. Such memory transistors may be programmed by storing a charge on the floating gate. This charge remains when power is removed from the array. The charge level may be detected by interrogating the devices. EEPROM devices in memory arrays can store one (single-bit cell) or more (multi-bit cell) bits per device. Over time, charge tends to leak from the floating gates of some of the memory devices. This may result in an incorrect value. The chance of this incorrectness is even increased if a number of different charge levels is stored in one device because the differences between charge levels which indicate the different data values stored by the cell are much smaller when a number of levels is stored.

An OTP memory is a memory with a large retention time, at least large compared to the retention time of the storage unit which is also present on the integrated circuit. In an OTP memory, data can only be stored once. OTPs may be, for example, EPROMs without the UV transparent windows in the packages, which can then also be called PROMs. Detailed information on OTP memories can be found in "A new programmable cell utilizing insulator breakdown", Sato, Nawata, Wada, IEDM Tech. Dig., pp. 639-643, 1985 (Paper 2.7 of "Non-volatile semiconductor memories, technologies, design, and applications"). Also a fuse-logic OTP memory can be used. Programming such a memory requires the removal of significant amounts of materials by evaporation.

In this OTP memory 5, a Unique Chip Identifier (ID_{UC}), a resurrection key R_{K} and the expiration date D_{EXP} of the information stored or to be stored in the information area 2 is stored. A Unique Chip Identifier is a unique number associated with the integrated circuit present on the record carrier, which cannot normally be amended or deleted and can be used for identification purposes, but also in copy protection or access protection schemes. This Unique Chip Identifier can be stored "in the clear" and is then accessible without the knowledge of encryption keys or the like.

As stated before, this resurrection key R_{K} is used to restore the lost or deteriorated additional information of the storage unit 4. In a preferred embodiment, the expiration date D_{EXP} is also used in the restoration of this additional information. The operation of R_{K} and D_{EXP} will be elucidated in embodiments of the method according to the invention, which are described below.

In this embodiment of the record carrier according to the invention, the information stored in the information area 2 of the record carrier 1 is encrypted with Asset Key A_{K} stored in the storage unit 4 of the integrated circuit 3. It should be noted that the terms encryption and decryption of information are also understood to mean scrambling and descrambling. In fact, it is evident to those skilled in the art that there is no fundamental difference between scrambling/descrambling and encrypting/decrypting information.

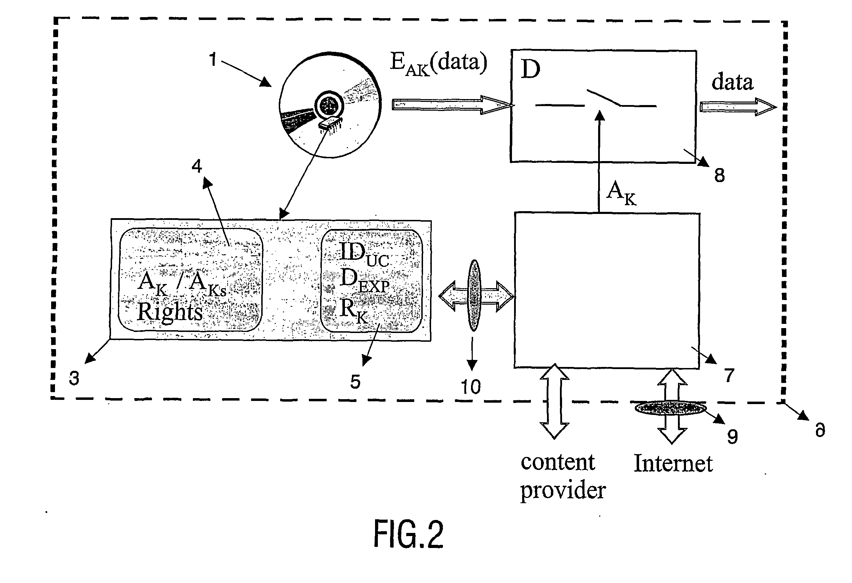

Fig. 2 shows the use of the record carrier of Fig. 1. In Fig. 2, the record carrier 1 of Fig. 1 is read out by a player 6. This player may be any kind of player for playing record carriers, such as, for example, the well-known CD-Audio player or the DVD-Video player. The operation and functioning of such players is known to the person skilled in the art. Compared to the known players, this player 6 is modified in that it comprises a security module 7, which is capable of reading out the information present in the storage unit 4 and the information present in the OTP memory 5.

Using the additional information, A_{K} / A_{Ks}, Rights, present in the storage unit 4, the data stored in the information area 2 of the record carrier 1 is protected against illegal use. The data, E_{AK}(DATA), is encrypted with Asset Key A_{K}. The security module 7 reads out the Asset Key A_{K} from the storage unit on the integrated circuit and sends this key to the decryption module 8 in which the encrypted data E_{AK}(data) is decrypted to result data which can be further processed in or outside the player 6.

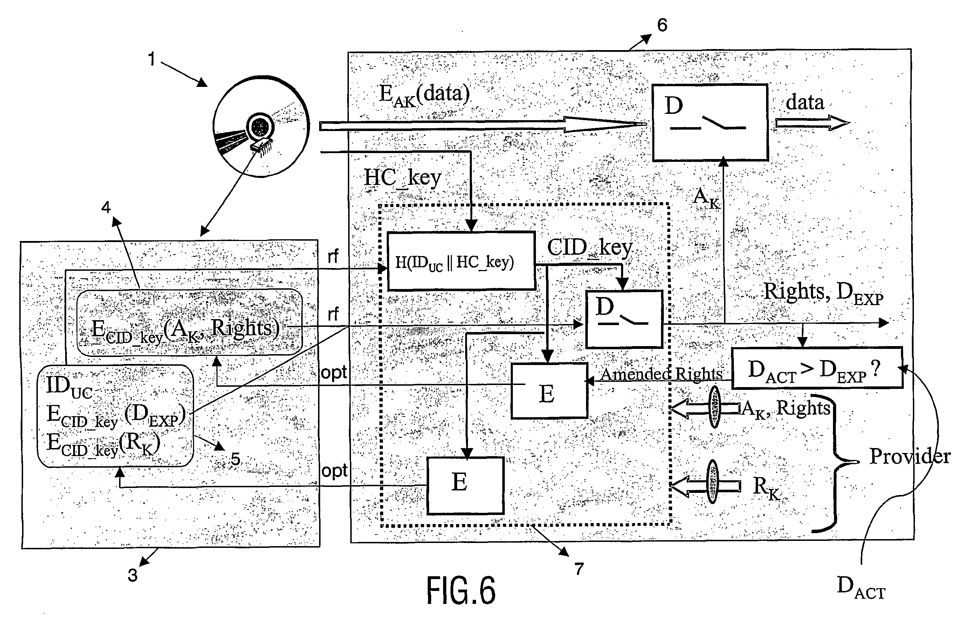

If the additional information cannot be reliably read out by the security module 7, the R_{K} can be used for restoring this additional information. This can be accomplished, for example, by connecting to the Internet via a so-called Secure Authenticated Channel (SAC) 9. This can also be accomplished by connecting to a content provider. This can also be performed in a shop in which the additional information is restored using the R_{K}. If the integrated circuit is capable of producing sufficient processing power, additional security can be achieved by applying a so-called Secure Authenticated Channel (SAC) 10 between the integrated circuit 3 and the security module 7 in the player 6. This will be further explained with reference to Fig. 6.

Different embodiments of the use of the record carrier of Fig. 1 as shown in Fig. 2 will now be discussed and explained with reference to Figs. 3 to 6. In every embodiment shown in these Figures, the resurrection key R_{K} is used for restoring the Asset Keys and the Rights via Internet, a content provider or any other possible trusted third party. This resurrection R_{K} may comprise a unique number which can be used by a Trusted Third Party (TTP) when reading out the additional information and/or checking the integrity of this additional information. It is also possible that the resurrection key R_{K} comprises an encryption/decryption key, a certificate or any other information that can be used by the TTP.

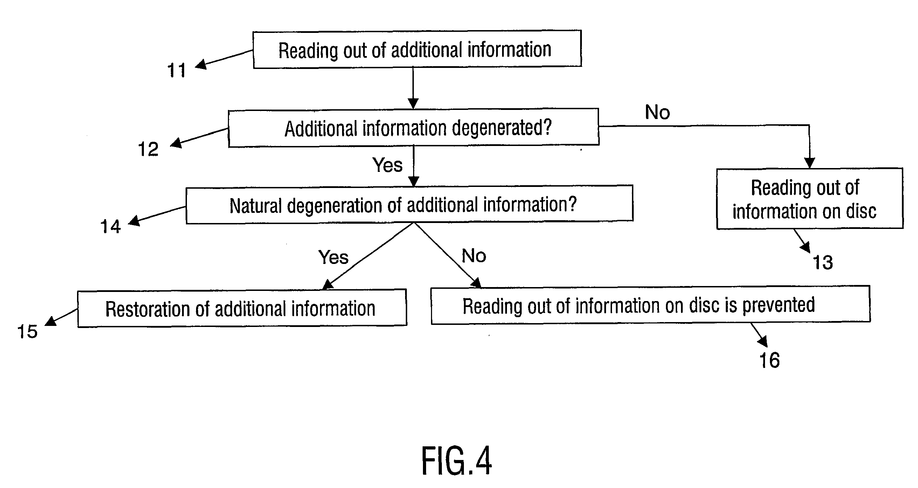

Fig. 3 shows a first embodiment of the method of restoring the additional information present on the integrated circuit of the record carrier according to the invention. Fig. 4 shows a flow chart accompanying this embodiment. In this embodiment, the storage unit present on the integrated circuit 3 is a non-volatile memory, in particular an EEPROM 4. In this embodiment, the additional information stored in the EEPROM has been lost and this information is restored via a provider.

The Asset Keys A_{K} and the Rights are encrypted by a disc key CID_key. The encrypted Asset Keys and Rights, E_{CID_key}(A_{K}, Rights), are stored in the EEPROM 4. The CID_key is derived by hashing the Unique Chip Identifier ID_{UC} with a Hidden Channel Key HC_key. However, it is also possible that the CID_key is derived by decrypting the ID_{UC} (when ID_{UC} is encrypted with the HC_key) with the HC_key or that the CID_key is derived by decrypting the HC_key ID_{UC} (when HC_key is encrypted with the ID_{UC}) with the ID_{UC}. In contrast to ID_{UC}, this Hidden Channel Key is not allowed to be present in the clear, but can only be read out by a compliant player 6. This Hidden Channel Key may be, for example, the Hidden Channel Key as described in WO02/15185 (= PHNL000451). The Resurrection Key R_{K} is also encrypted with the CID_key and the Resurrection Key thus encrypted, E_{CID_key}(R_{K}), is stored in OTP memory 5, preferably in fuse-logic. As mentioned before, this type of memory has a much longer retention time as compared to EEPROM.

Information stored or to be stored in the storage unit 4 and the OTP memory 5 can be transferred between the player 6 and the integrated circuit 3 in different ways. In this embodiment, the data transfer from the security module in the player to the integrated circuit is effected via an optical link (opt), for example, comprising a LED/photodiode, and the data transfer from the integrated circuit to the security module in the player is effected via a radio frequency link (rf), for example, a radio transmitter/receiver combination. Information on these links can be found in WO 02/17316 (= PHNL010233).

The content of the EEPROM 4 is analyzed in the security module 7. This will be explained with reference to Fig. 4. First, the EEPROM data, the additional information is read from the EEPROM in step 11. In step 12, the security module 7 checks whether the EEPROM data, A_{K}, Rights, has been degenerated. If the EEPROM data has not been lost or degenerated, the information of the disc is read out by decrypting the E_{AK}(data) with the read out Asset Key A_{K} in step 13. If the EEPROM data has been lost or degenerated, the security module 7 checks whether the EEPROM data, A_{K}, Rights, has been degenerated "naturally", in step 14. There are different ways to check whether the data has been degenerated naturally. For example, it is possible to detect the number of errors in a certain block and calculate the error rate. If this number exceeds a certain predefined number, it can be decided that the degeneration has not been the result of natural degeneration. Patent application WO96/20443 describes different embodiments of performing such a check. It is also possible to check whether the number of errors in the data exceeds the error correction capacity of the data. It can be decided that, if this is the case, the degeneration is not due to natural degeneration.

In a preferred embodiment of this natural degeneration check, the OTP memory also comprises information related to the expiration date D_{EXP} of the information stored or to be stored in the information area. Using this expiration date, it is possible to perform a more accurate detection of the way of degeneration of the EEPROM data. It is important to distinguish between natural and non-natural degeneration, because non-natural degeneration can be the result of attempts to illegally get access to the information stored in the information area of the record carrier by trying to delete the EEPROM data. By checking specific tamper profiles, the security module 7 can detect non-natural degeneration (fraud) and block access to the information forever.

In a preferred embodiment, the degeneration of the EEPROM data is detected in the integrated circuit 3 itself by checking the pattern of 'natural' data degeneration. This has the advantage that information relating to the checking of the pattern of a degeneration does not have to be outsourced to the security module 7 of the player 6. This will reduce the possibilities of "eavesdropping" on this information. Furthermore, as the check is performed in the integrated circuit itself, external signals are hampered from influencing this check. To be able to perform this check in the integrated circuit, the integrated circuit must be able to produce sufficient processing power.

If it is detected in step 14 that the errors in the data or the loss of the data has been the result of natural degeneration, the resurrection key R_{K} combined with the disc key CID_key can be used to restore the keys and the rights, for example, via the Internet or via a provider of a trusted party ("shop") by using a SAC, step 15. In a preferred embodiment, the availability of A_{K} and the rights supplied by the content provider should be coupled to the expected EEPROM expiration date D_{EXP}. This has the advantage that replay attacks are prevented. If it is detected in step 14 that the errors in the data or the loss of the data has not been the result of natural degeneration, decrypting of the information present on the disc is prevented, in step 16.

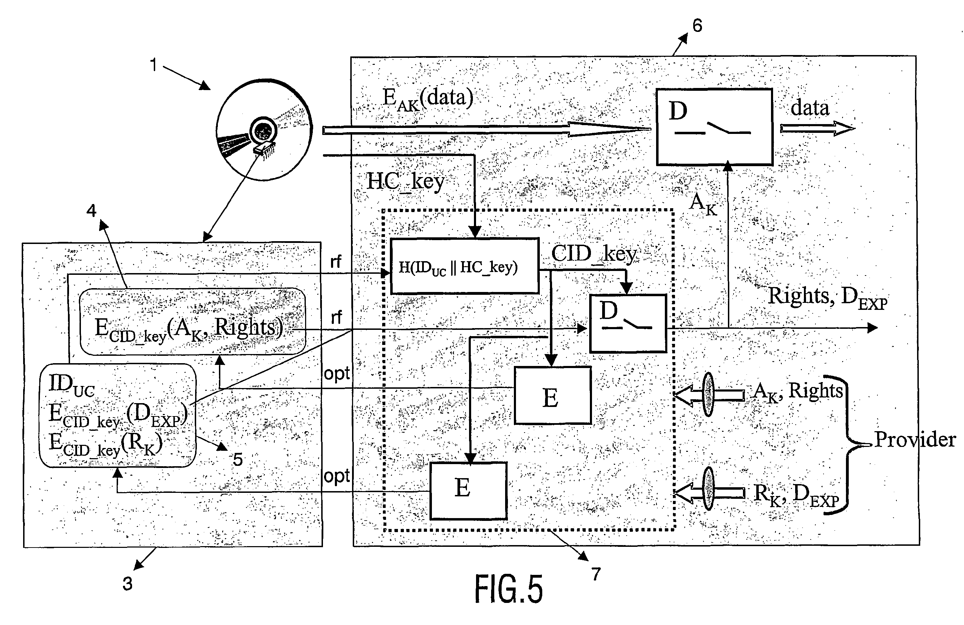

Fig. 5 shows a second embodiment of the method of restoring the additional information present on the integrated circuit of the record carrier according to the invention. In this embodiment, the Rights are made ever lasting via the provider after the expiration date has passed, despite the condition of the EEPROM data. This embodiment is based on the understanding that the actuality or lifetime information stored in the information area of the record carrier is limited. As an example, a software release is substituted by new updates and certain music is not popular anymore after a certain time. The rights management architecture checks if the disc content has been expired. After expiration, the copy protection mechanism is bypassed by getting everlasting, or amended rights from the provider. Passing the expiration date will trigger the connection to the provider via, for example, the Internet. In a variant of this embodiment, the expiration date D_{EXP} of the information is stored in OTP memory in the integrated circuit. Instead of storing the expiration date, it is also possible to use the production date of the record carrier. A certain predefined time after the production date, the Rights can then be made everlasting or can be amended. It is also possible to use multiple dates to allow a gradual amendment of the Rights, for example, after the first date the Rights have been amended to copy-one, and after the second date the Rights have been amended to unlimited rights. It is also possible to use the expiration date or dates for restricting the use after a certain time, for example, in the case of a record carrier comprising a demo of a certain software program.

Fig. 6 shows a third embodiment of the method of restoring the additional information present on the integrated circuit of the record carrier according to the invention. This embodiment differs from the second embodiment in that the Rights are amended or made everlasting after the expiration date without the intervention of or connection to the provider. In the player 6, it is checked whether the disc content has expired. This is performed by comparing the actual date D_{ACT} with the expiration date D_{EXP}. If the actual date D_{ACT} is after the expiration date D_{EXP}, the additional information is amended in that 'everlasting rights' are stored in the storage unit 4. In order to increase security, the comparison whether the actual date D_{ACT} is after the expiration date D_{EXP} can also be performed inside the security module 7.

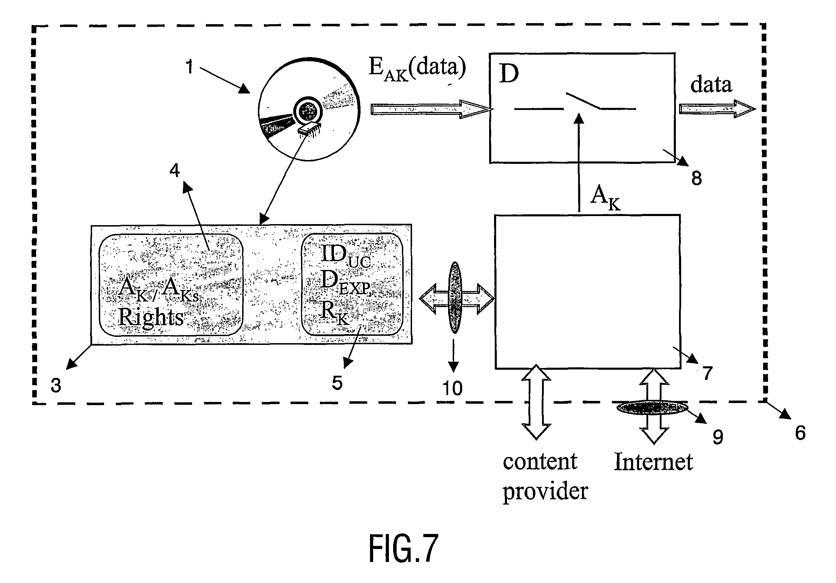

Fig. 7 shows a fourth embodiment of the method of restoring the additional information present on the integrated circuit of the record carrier according to the invention. This embodiment differs from the third embodiment in that the transfer of data between the integrated circuit 3 and the security module 7 of the player 6 takes places via a Secure Authenticated Channel (SAC) 10. Such a SAC may be based on, for example, public key cryptography. By implementing a SAC between the security module 7 and the integrated circuit 3, possible attacks on the channel between the security module and the integrated circuit can be blocked. An additional feature of a SAC protocol is that illegally produced or cloned discs can be revoked in a thorough way. In the SAC protocol, certificates can be distributed by a Trusted Third Party (TTP) that identifies uniquely every disc or group of discs. The SAC protocol checks by means of the ID_{UC} whether the disc is illegal or not. As a result, all cloned discs and their original one(s) can be revoked. The revocation list ("black-list") can be distributed via legal discs to the player/recorder module or through (super) distribution or whenever rights are attained. The EEPROM 4 may further comprise keys relevant to the set-up of the SAC. To be able to revoke a disc, the player 6 verifies whether the ID_{UC} is present on the revocation list. The asset keys and the rights will be communicated via the SAC to the security module. In the same way as in the third embodiment, the player 6 checks whether the disc content has expired by comparing the actual date D_{ACT} with the expiration date D_{EXT}. If the actual date D_{ACT} is after the expiration date D_{EXP}, the additional information is amended in that 'ever-lasting rights' are stored in the storage unit 4.

The invention claimed is not limited to a particular kind of record carrier comprising an integrated circuit. All kinds of record carriers can be used, such as, for example, a CD-ROM disc, a DVD-Video disc, a DVD+RW disc a Blu-Ray disc, or a Mini Disc, but also non-optical record carriers, such as, for example, a hard disc or a magnetical tape. The invention is neither limited to a particular kind of connection method between the integrated circuit and the security module present in the player (or recorder). Although_an optical/radio frequency connection method is used in the embodiments (in which an optical connection is used for communication from the security module in the player to the integrated circuit, and in which a RF connection is used for communication from the integrated circuit to the security module in the player), it is, for example, also possible to use an inductive coupling method using, for example, the well-known MIFARE contactless interface system (standardized in ISO/IEC 14443 for contactless cards). It is also possible to use a capacitive coupling, for example, the capacitive coupling already mentioned and described in patent application WO 02/25582 (= PHNL000525).

It is further possible to use RF coupling for both connections (integrated circuit towards security module and security module to integrated circuit), for example using the so-called Meu chip, developed by Hitachi. The invention is not limited to a particular kind of storage unit or to a particular kind of OTP memory.

## Claims

1. A record carrier (1) comprising an information area (2) for storing information, and an integrated circuit (3) comprising a storage unit (4) for storing additional information (A_{K}, Rights), the integrated circuit further comprising a one-time programmable memory (5) comprising a resurrection key (R_{K}) for restoring the additional information, the one-time programmable memory having a substantially larger data retention time than the storage unit.

2. A record carrier according to claim 1, wherein the one-time programmable memory (5) further comprises information related to the expiration date (D_{EXP}) of the information stored or to be stored in the information area.

3. A record carrier according to claim 1 or 2, wherein the record carrier further comprises a disc key (CID_key).

4. A record carrier according to claim 3, wherein the resurrection key (R_{K}) is encrypted with the disc key (CID_key).

5. A record carrier according to claim 3, wherein the expiration date (D_{EXP}) is encrypted with the disc key (CID_key).

6. A record carrier according to any one of claims 3 and 4, wherein the disc key (CBD_key) is a unique disc key that is derived from an identifier (ID_{UC}) of the integrated circuit (3).

7. A record carrier according to claim 6, wherein the one-time programmable memory (5) further comprises the identifier (IDUC).

8. A record carrier according to any one of claims 1 to 7, wherein the one-time programmable memory (5) is realized in fuse-logic.

9. A record carrier according to any one of claims 1 to 8, wherein the storage unit (4) is an EEPROM having a data retention time of approximately 10 years.

10. A record carrier according to any one of claims 1 to 9, wherein the integrated circuit (3) is contactlessly readable.

11. A method of restoring the additional information (A_{K}, Rights) stored in the storage unit (4) present on the integrated circuit (3) of the record carrier (1) of any one of claims 1 to 10, the method comprising the steps of:
- reading out the additional information stored in the storage unit (11);
- checking the integrity of the additional information (12); and, if the integrity of the additional information is insufficient,
- reading out the resurrection key (R_{K}) stored in the one-time programmable memory (5) and restoring the additional information by using the resurrection key (15).

12. A method according to claim 11, wherein, if the integrity of the additional information is insufficient (12), the method further comprises the step of checking whether the additional information has degenerated in a natural way (14), and wherein the step of reading out the resurrection key (R_{K}) stored in the one-time programmable memory (5) and of restoring the additional information by using the resurrection key (R_{K}) is only performed if the additional information has degenerated in a natural way.

13. A method according to claim 11 or 12, wherein the step of restoring the additional information by using the resurrection key is performed by a Trusted Third Party (content provider) or on the Internet via a Secure Authenticated Channel (SAC-9).

14. A method according to any one of claims 11 to 13, wherein the expiration date (D_{EXP}) is used in the step of checking whether the additional information has degenerated in a natural way (14).

15. An apparatus for performing the method according to any one of claims 11 to 14, the apparatus comprising a security module (7) comprising:
- means for reading out the additional information (A_{K}, Rights) stored in the storage unit (4);
- means for checking the integrity of the additional information;
- means for reading out the resurrection key (R_{K}) stored in the one-time programmable memory (5) and restoring the additional information by using the resurrection key if the integrity of the additional information is insufficient.

16. An integrated circuit for use in the record carrier (1) according to any one of claims 1 to 10, the integrated circuit comprising a storage unit (4) for storing additional information (A_{K}, Rights), and a one-time programmable memory (5) comprising a resurrection key (R_{K}) for restoring the additional information, the one-time programmable memory having a substantially larger data retention time than the storage unit.

## Patentansprüche

1. Aufzeichnungsträger (1) mit einem Informationsgebiet (2) zum Speichern von Information, und eine integrierte Schaltung (3) mit einer Speichereinheit zur Speicherung zusätzlicher Information (A_{K}, Rechte), wobei die integrierte Schaltung weiterhin einen einmalig programmierbaren Speicher (5) mit einem Auferweckungsschlüssel (Rₖ zur Wiederherstellung der zusätzlichen Information, wobei der einmalig programmierbare Speicher eine wesentlich längere Datenaufbewahrungszeit hat als die Speichereinheit.

2. Aufzeichnungsträger nach Anspruch 1, wobei der einmalig programmierbare Speicher (5) weiterhin Information in Bezug auf das Fälligkeitsdatum (D_{EXP}) der in dem Informationsbereich gespeicherten oder zu speichernden Information aufweist.

3. Aufzeichnungsträger nach Anspruch 1 oder 2, wobei der Aufzeichnungsträger weiterhin eines Diskschlüssel (CID Schlüssel) aufweist.

4. Aufzeichnungsträger nach Anspruch 3, wobei der Auferweckungsschlüssel (Rₖ) mit dem Diskschlüssel (CID_key) verschlüsselt ist.

5. Aufzeichnungsträger nach Anspruch 3, wobei das Fälligkeitsdatum (D_{EXP}) mit dem Diskschlüssel (CID_key) verschlüsselt ist.

6. Aufzeichnungsträger nach einem der Ansprüche 3 und 4, wobei der Diskschlüssel (CID_key) ein einzigartiger Diskschlüssel ist, der von einem Identifizierer (ID_{UC}) der integrierten Schaltung (3) hergeleitet ist.

7. Aufzeichnungsträger nach Anspruch 6, wobei der einmalig programmierbare Speicher (5) weiterhin den Identifizierer (IDUC) enthält.

8. Aufzeichnungsträger nach einem der Ansprüche 1 bis 7, wobei der einmalig programmierbare Speicher (5) in unscharfe Logik verwirklicht ist.

9. Aufzeichnungsträger nach einem der Ansprüche 1 bis 8, wobei die Speichereinheit (4) ein EEPROM mit einer Datenfesthaltezeit von etwa 10 Jahren ist.

10. Aufzeichnungsträger nach einem der Ansprüche 1 bis 9, wobei die integrierte Schaltung (3) kontaktlos auslesbar ist.

11. Verfahren zum Speichern der zusätzlichen Information (A_{K}, Rights), gespeichert in der Speichereinheit (4) in der integrierten Schaltung (3) des Aufzeichnungsträgers (1) nach einem der Ansprüche 1 bis 10, wobei das Verfahren die nachfolgenden Verfahrensschritte umfasst:
- das Auslesen der in der Speichereinheit (11) gespeicherten zusätzlichen Information;
- das Überprüfen der Integrität der zusätzlichen Information (12); und, wenn die Integrität der zusätzlichen Information nicht ausreicht,
- das Auslesen des in dem einmalig programmierbaren Speicher (5) gespeicherten Auferweckungsschlüssels (R_{K}) und das Wiederherstellen der zusätzlichen Information durch Verwendung des Auferweckungsschlüssels (15).

12. Verfahren nach Anspruch 11, wobei, wenn die Integrität der zusätzlichen Information nicht ausreicht (12), das Verfahren weiterhin den nachfolgenden Verfahrensschritt umfasst: das Überprüfen ob die zusätzliche Information auf natürliche Art und Weise (14) degeneriert worden ist, und wobei das Auslesen des in dem einmalig programmierbaren Speicher (5) gespeicherten Auferweckungsschlüssels (R_{K}) und das Wiederherstellen der zusätzlichen Information durch Verwendung des Auferweckungsschlüsseln (R_{K}) nur dann durchgeführt wird, wenn die zusätzliche Information auf eine natürliche Art und Weise degeneriert worden ist.

13. Verfahren nach Anspruch 11 oder 12, wobei der Schritt der Wiederherstellung der zusätzlichen Information durch Verwendung des Auferweckungsschlüssels durch eine vertraute dritte Partie ("Trusted Third Party") (Inhaltprovider) oder übers Internet und zwar über einen SAC-9 ("Secure Authenticated Channel") durchgeführt wird.

14. Verfahren nach einem der Ansprüche 11 bis 13, wobei das Fälligkeitsdatum (D_{EXP}) in dem Schritt der Überprüfung verwendet wird, ob die zusätzliche Information auf natürliche Art und Weise (14) degeneriert ist.

15. Anordnung zum Durchführen des Verfahrens nach einem der Ansprüche 11 bis 14, wobei die Anordnung ein Sicherheitsmodul (7) aufweist, das Folgendes umfasst:
- Mittel zum Auslesen der in der Speichereinheit (4) gespeicherten zusätzlichen Information (A_{K}, Rights);
- Mittel zur Überprüfung der Integrität der zusätzlichen Information;
- Mittel zum Auslesen des in dem einmalig programmierbaren Speicher (5) gespeicherten Auferweckungsschlüssels (R_{K}) und zum Wiederherstellen der zusätzlichen Information durch Verwendung des Auferweckungsschlüssels, wenn die Integrität der zusätzlichen Information nicht ausreicht.

16. Integrierte Schaltung zur Verwendung in dem Aufzeichnungsträger (1) nach einem der Ansprüche 1 bis 10, wobei die integrierte Schaltung eine Speichereinheit (4) zur Speicherung zusätzlicher Information (A_{K}, Rights) und einen einmalig programmierbaren Speicher (5) mit einem Auferweckungsschlüssel (R_{K}) aufweist, und zwar zum Wiederherstellen der zusätzlichen Information, wobei der einmalig programmierbare Speicher eine wesentlich längere Datenfesthaltezeit als die Speichereinheit hat.

## Revendications

1. Support d'enregistrement (1) comprenant une zone d'information (2) pour mémoriser des informations, et un circuit intégré (3) comprenant une unité de mémoire (4) pour mémoriser des informations supplémentaires (C_{A}, droits), le circuit intégré comprenant en outre une mémoire programmable une seule fois (5), comprenant une clé de résurrection (C_{R}) pour restaurer les informations supplémentaires, la mémoire programmable une seule fois ayant un temps de conservation des données sensiblement plus grand que l'unité de mémoire.

2. Support d'enregistrement selon la revendication 1, dans lequel la mémoire programmable une seule fois (5) comprend en outre des informations relatives à la date d'expiration (D_{EXP}) des informations mémorisées ou qui doivent être mémorisées dans la zone d'information.

3. Support d'enregistrement selon la revendication 1 ou 2, où le support d'enregistrement comprend en outre une clé de disque (clé_CID).

4. Support d'enregistrement selon la revendication 3, dans lequel la clé de résurrection (C_{R}) est chiffrée avec la clé de disque (clé_CID).

5. Support d'enregistrement selon la revendication 3, dans lequel la date d'expiration (D_{EXP}) est chiffrée avec la clé de disque (clé_CID).

6. Support d'enregistrement selon l'une quelconque des revendications 3 et 4, dans lequel la clé de disque (clé_CID) est une clé de disque unique qui est dérivée d'un identificateur (ID_{PU}) du circuit intégré (3).

7. Support d'enregistrement selon la revendication 6, dans lequel la mémoire programmable une seule fois (5) comprend en outre l'identificateur (ID_{PU}).

8. Support d'enregistrement selon l'une quelconque des revendications 1 à 7, dans lequel la mémoire programmable une seule fois (5) est réalisée dans une logique par fusibles.

9. Support d'enregistrement selon l'une quelconque des revendications 1 à 8, dans lequel l'unité de mémoire (4) est une EEPROM ayant un temps de conservation des données d'environ 10 ans.

10. Support d'enregistrement selon l'une quelconque des revendications 1 à 9, dans lequel le circuit intégré (3) est lisible sans contact.

11. Procédé de restauration des informations supplémentaires (C_{A}, droits) mémorisées dans l'unité de mémoire (4) présente sur le circuit intégré (3) du support d'enregistrement (1) selon l'une quelconque des revendications 1 à 10, le procédé comprenant les étapes de:
- lecture des informations supplémentaires mémorisées dans l'unité de mémoire (11);
- contrôle de l'intégrité des informations supplémentaires (12); et, si l'intégrité des informations supplémentaires est insuffisante,
- lecture de la clé de résurrection (C_{R}) mémorisée dans la mémoire programmable une seule fois (5) et restauration des informations supplémentaires en utilisant la clé de résurrection (15).

12. Procédé selon la revendication 11, où, si l'intégrité des informations supplémentaires est insuffisante (12), le procédé comprend en outre l'étape de contrôle destinée à déterminer si les informations supplémentaires se sont dégradées d'une façon naturelle (14), et où l'étape de lecture de la clé de résurrection (C_{R}) mémorisée dans la mémoire programmable une seule fois (5) et de restauration des informations supplémentaires en utilisant la clé de résurrection (C_{R}) n'est exécutée que si les informations supplémentaires se sont dégradées d'une façon naturelle.

13. Procédé selon la revendication 11 ou 12, dans lequel l'étape de restauration des informations supplémentaires en utilisant la clé de résurrection est exécutée par un tiers de confiance (fournisseur de contenu) ou sur l'Internet via un canal authentifié sécurisé (SAC-9).

14. Procédé selon l'une quelconque des revendications 11 à 13, dans lequel la date d'expiration (D_{EXP}) est utilisée dans l'étape de contrôle destinée à déterminer si les informations supplémentaires se sont dégradées d'une façon naturelle (14).

15. Appareil pour exécuter le procédé selon l'une quelconque des revendications 11 à 14, l'appareil comprenant un module de sécurité (7) comprenant:
- un moyen pour lire les informations supplémentaires (C_{A}, droits) mémorisées dans l'unité de mémoire (4);
- un moyen pour contrôler l'intégrité des informations supplémentaires;
- un moyen pour lire la clé de résurrection (C_{R}) mémorisée dans la mémoire programmable une seule fois (5) et pour restaurer les informations supplémentaires en utilisant la clé de résurrection si l'intégrité des informations supplémentaires est insuffisante.

16. Circuit intégré destiné à être utilisé dans le support d'enregistrement (1) selon l'une quelconque des revendications 1 à 10, le circuit intégré comprenant une unité de mémoire (4) pour mémoriser des informations supplémentaires (C_{A}, droits), et une mémoire programmable une seule fois (5) comprenant une clé de résurrection (C_{R}) pour restaurer les informations supplémentaires, la mémoire programmable une seule fois ayant un temps de conservation des données sensiblement plus grand que l'unité de mémoire.
